# EUROPÄISCHE PATENTSCHRIFT

(11) **EP 3 665 068 B1**
(45) Veröffentlichungstag und Bekanntmachung des Hinweises auf die Patenterteilung: **14.04.2021**
(21) Anmeldenummer: 18743812.2
(22) Anmeldetag: 25.07.2018
(51) Int. Cl.: B62D 25/00, B62D 29/00

(54) **SYSTEM EINES ABGEDICHTETEN UND VERSTÄRKTEN STRUKTURELEMENTES**
SYSTEM OF A SEALED AND REINFORCED STRUCTURAL ELEMENT
SYSTÈME D'ÉLÉMENT DE STRUCTURE SÉPARÉE ET RENFORCÉE

(30) Priorität: 07.08.2017 EP 17185134
(43) Veröffentlichungstag der Anmeldung: 17.06.2020
(73) Patentinhaber: Sika Technology AG, 6340 Baar (CH)
(72) Erfinder: SHEHU, Ardi, 3111 Rotselaar (BE); BELPAIRE, Vincent, 1180 Uccle (BE)
(74) Vertreter: Sika Patent Attorneys
(86) Internationale Anmeldenummer: PCT/EP2018/070117
(87) Internationale Veröffentlichungsnummer: WO 2019/029989

(56) Entgegenhaltungen:
- EP-A1- 1 975 006
- EP-A1- 2 019 027
- EP-A1- 2 151 369
- EP-A2- 1 132 644
- WO-A1-01/83206
- DE-A1- 10 137 028

## Beschreibung

Die Erfindung betrifft ein System eines abgedichteten und verstärkten Strukturelementes eines Kraftfahrzeuges sowie ein Element zur Abdichtung und Verstärkung von Strukturelementen.

Vielfach weisen Bauelemente, wie beispielsweise Karosserien und/oder Rahmen von Transport- und Fortbewegungsmitteln, insbesondere von Kraftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzung, die zur Korrosion der Bauelemente führen können, abgedichtet werden. Oft ist es auch wünschenswert, die Hohlräume und somit das Bauelement zu verstärken, jedoch das geringe Gewicht dieser Bauart beizubehalten. Oftmals ist es auch notwendig, die Hohlräume und somit die Bauelemente zu stabilisieren, um Geräusche, die sonst den Hohlraum entlang oder durch diesen hindurch übertragen werden können, zu reduzieren. Viele dieser Hohlräume weisen zudem eine unregelmässige Form oder ein enges Ausmass auf, wodurch es erschwert wird, sie richtig abzudichten, zu verstärken oder zu dämpfen.

Insbesondere im Automobilbau, aber auch im Flugzeug- und Bootsbau, werden deshalb Abdichtungselemente (englisch: *baffle)* verwendet, um Hohlräume abzudichten und/oder akustisch abzuschotten, und Verstärkungselemente (englisch: *reinforcer*) verwendet, um Hohlräume zu verstärken, siehe zum Beispiel EP2019027A1.

Der Erfindung liegt die Aufgabe zugrunde, ein verbessertes System zur Abdichtung und Verstärkung von Strukturelementen in Kraftfahrzeugen zur Verfügung zu stellen. Insbesondere soll das System kostengünstiger und einfach in der Handhabung sein als herkömmliche bekannte Systeme.

Diese Aufgabe wird zunächst gelöst durch ein System eines abgedichteten und verstärkten Strukturelementes eines Kraftfahrzeuges, wobei das System umfasst: ein Strukturelement, welches einen Hohlraum mit einer Längsachse hat; einen Träger mit einer ersten Seite und einer zweiten Seite und mit einem ersten Randbereich und einem zweiten Randbereich, wobei die Randbereiche jeweils dem Strukturelement zugewandt sind, und wobei die erste Seite und die zweite Seite jeweils orthogonal zur Längsachse des Strukturelementes angeordnet sind; ein erstes Material zur Verstärkung des Strukturelementes, welches zumindest zwischen dem ersten Randbereich des Trägers und dem Strukturelement angeordnet ist, wobei das erste Material ein E-Modul von zumindest 100 MPa hat; und ein zweites Material zur Abdichtung des Strukturelementes, welches zumindest zwischen dem zweiten Randbereich des Trägers und dem Strukturelement angeordnet ist, wobei das zweite Material ein E-Modul von höchstens 20 MPa hat.

Das hier vorgeschlagene System bietet den Vorteil, dass mit nur einem Bauteil ein Strukturelement sowohl verstärkt als auch abgedichtet werden kann. Dadurch können mit einem Bauteil die Funktionen von herkömmlichen Bafflen und von herkömmlichen Reinforcern gleichzeitig übernommen werden. Für gewisse Anwendungen können durch das hier vorgeschlagene System zwei herkömmliche Bauteile, insbesondere ein Baffle und ein Reinforcer, durch ein einziges Bauteil ersetzt werden, welches beide Funktionen übernehmen kann. Dies führt einerseits zu Gewichtseinsparungen, aber auch zu Kostenvorteilen und zu vereinfachten Abläufen in der Herstellung von Kraftfahrzeugen.

Ein Kerngedanke der vorliegenden Erfindung ist es, dass insbesondere in Bereichen der Karosserie, in welchen sowohl eine Verstärkungsfunktion als auch eine Abdichtungsfunktion benötigt wird, beide Funktionen auf bestimmte Art und Weise in einem einzigen Bauteil integriert werden können. Es hat sich dabei in Versuchen gezeigt, dass dies besonders effizient durch das hier vorgeschlagene System erreicht werden kann, bei dem eine Verstärkungsfunktion an einem ersten Randbereich des Trägers angeordnet ist und bei dem eine Abdichtungsfunktion an einem zweiten Randbereich des Trägers angeordnet ist. Dabei ist der Träger vorzugsweise flach ausgestaltet, so dass er im Wesentlichen eine Formgebung von herkömmlichen Bafflen aufweist.

Durch die Verwendung von solchen flachen, den Hohlraum des Strukturelementes verschliessenden Trägern, kann auf einfache Art und Weise die Abdichtungsfunktion erzielt werden. Es hat sich nun in Versuchen gezeigt, dass durch das Ersetzen von herkömmlichem Abdichtungsmaterial mit Verstärkungsmaterial an bestimmten Stellen des Trägers, zusätzlich zur Abdichtungsfunktion eine Verstärkungsfunktion erzielt werden kann.

Der Begriff "orthogonal zur Längsachse" bedeutet im Zusammenhang dieser Erfindung, dass die erste und die zweite Seite im Wesentlichen so ausgerichtet sind, dass eine Längsachse des Strukturelementes im Wesentlichen senkrecht auf diesen Seiten des Trägers steht. Dabei muss die Längsachse nicht genau senkrecht auf diesen Seiten des Trägers stehen, insbesondere in Situationen, in welchen das Strukturelement unregelmässig geformt ist und/oder in Situationen, in welchen die erste und die zweite Seite des Trägers unregelmässig geformt sind. Mit dem Begriff ist demnach gemeint, dass der Träger derart im Strukturelement angeordnet ist, dass die erste Seite des Trägers und die zweite Seite des Trägers im Wesentlichen in einem Querschnitt des Strukturelementes liegen.

Das erste Material zur Verstärkung des Strukturelementes hat ein E-Modul von zumindest 100 MPa. In einer Weiterbildung hat das erste Material ein E-Modul von zumindest 200 MPa, bevorzugt von zumindest 400 MPa.

Das zweite Material zur Abdichtung des Strukturelementes hat ein E-Modul von höchstens 20 MPa. In einer Weiterbildung hat das zweite Material ein E-Modul von höchstens 10 MPa, bevorzugt von höchstens 5 MPa.

Die angegebenen Werte des ersten Materials und des zweiten Materials hinsichtlich deren E-Modul beziehen sich auf das erste Material und das zweite Material in deren Verwendungszustand im Kraftfahrzeug. Dies bedeutet, dass die Werte insbesondere nach einer allfälligen Expansion der Materialien und nach einer allfälligen Aushärtung der Materialien angegeben sind.

In einer beispielhaften Ausführungsform ist der Träger und das Strukturelement durch das erste Material und/oder durch das zweite Material miteinander verklebt. Eine solche Verklebung des Trägers mit dem Strukturelement kann insbesondere durch eine allfällige Expansion und eine allfällige Aushärtung des ersten und des zweiten Materials erfolgen.

In einer beispielhaften Ausführungsform hat der Träger eine Dicke, gemessen in Richtung der Längsachse des Hohlraumes, von 5 bis 50 mm, bevorzugt von 5 bis 40 mm, besonders bevorzugt von 10 bis 30 mm.

Das Vorsehen von solch "flachen" Trägern hat den Vorteil, dass dadurch einerseits leichte Träger zur Verfügung gestellt werden können, und andererseits eignen sich solche Träger in der Form von herkömmlichen Bafflen insbesondere zur Abdichtung von Strukturelementen.

In einer beispielhaften Ausführungsform bilden die erste Seite und die zweite Seite des Trägers jeweils eine geschlossene Fläche, oder haben die erste Seite und die zweite Seite Durchgänge, welche durch das erste Material und/oder das zweite Material abgedichtet sind.

Für die Abdichtungsfunktion des Bauteils ist es vorteilhaft, wenn ein Querschnitt des Strukturelementes durch die Gesamtheit des Trägers, des ersten Materials und des zweiten Materials vollständig geschlossen ist.

In einer beispielhaften Ausführungsform ist ein Querschnitt des Strukturelementes durch den Träger, das erste Material und das zweite Material vollständig abgedichtet.

In einer beispielhaften Ausführungsform hat der Träger Rippen zur mechanischen Verstärkung des Trägers.

In einer beispielhaften Weiterbildung sind die Rippen auf der ersten Seite des Trägers oder auf der zweiten Seite des Trägers angeordnet.

In einer beispielhaften Weiterbildung verlaufen die Rippen von einem Randbereich des Trägers zu einem im Wesentlichen gegenüberliegenden Randbereich des Trägers.

Das Vorsehen von solchen Rippen bietet den Vorteil, dass dadurch der Träger an sich mechanisch verstärkt werden kann. Ein derart mechanisch verstärkter Träger kann dabei eine bessere mechanische Verstärkung des Strukturelementes erwirken.

In einer beispielhaften Ausführungsform besteht der Träger zumindest teilweise aus Kunststoff oder aus glasfaserverstärktem Kunststoff oder aus karbonfaserverstärktem Kunststoff.

Träger aus den genannten Materialien haben den Vorteil, dass sie einerseits leichtgewichtig sind und andererseits hohen mechanischen Belastungen standhalten können.

In einer beispielhaften Ausführungsform umfasst das erste Material einen Klebstoff, welcher durch eine Temperatur von mehr als 120°C härtbar ist.

In einer beispielhaften Ausführungsform hat das erste Material eine Expansionsrate von weniger als 500% oder ist das erste Material ein nicht expandierbares Material.

Wenig expandierbare oder nicht expandierbare Materialien bieten den Vorteil, dass dadurch das Material bei der Expansion nicht zu sehr an mechanischer Stabilität verliert. Grundsätzlich wird ein Material mechanisch schwächer, je stärker das Material expandiert wird.

Beispiele für das erste Material sind insbesondere SikaReinforcer®-940 oder SikaPower®-497. Dabei ist SikaReinforcer®-940 ein Beispiel für ein expandierbares Material, wobei SikaPower®-497 ein Beispiel für ein nicht expandierbares Material ist.

Der Ausdruck "nicht expandierbar" bedeutet im Zusammenhang dieser Erfindung, dass ein Material sein Volumen nicht mehr oder weniger als 10% verändert bei den für das Material vorgesehenen Prozessschritten. Beispielsweise können nicht expandierbare Klebstoffe bei einer Aushärtung leicht schrumpfen. Eine solche Volumenveränderung bei einem Aushärten wird im Sinne dieser Anmeldung als "nicht expandierbar" betrachtet.

In einer beispielhaften Ausführungsform umfasst das zweite Material einen Klebstoff, welcher durch eine Temperatur von mehr als 120° härtbar ist.

In einer beispielhaften Ausführungsform hat das zweite Material eine Expansionsrate von mehr als 500%, bevorzugt von mehr als 1000%, besonders bevorzugt von mehr als 1500%. In einer alternativen Ausführungsform ist das erste Material ein nicht expandierbares Material.

Beispiele für das zweite Material sind insbesondere SikaBaffle®-450 oder Sikaflex®-254. Dabei ist SikaBaffle®-450 ein beispielhaftes zweites Material mit einer Expansionsrate von mehr als 500%, und Sikaflex®-254 ist ein beispielhaftes zweites Material, welches nicht expandierbar ist.

In einer beispielhaften Ausführungsform ist das erste Material in einem ersten Bereich des Strukturelementes angeordnet, welcher eine nicht sichtbare Fläche des Kraftfahrzeugs bildet, und/oder ist das zweite Material zumindest in einem zweiten Bereich des Strukturelementes angeordnet, welcher eine sichtbare Fläche des Kraftfahrzeugs bildet.

Eine solche Anordnung des ersten Materials und des zweiten Materials hinsichtlich sichtbarer Flächen und nicht sichtbarer Flächen des Kraftfahrzeugs bietet den Vorteil, dass das zweite Material in der Regel zu weniger Deformationen des Strukturelementes führt. Daher ist es vorteilhaft, das erste Material in Bereichen des Strukturelementes einzusetzen, welche nicht sichtbar sind, und das zweite Material zumindest in Bereichen des Strukturelementes einzusetzen, welche von aussen sichtbar sind.

In einer beispielhaften Ausführungsform sind das erste Material und das zweite Material jeweils expandierbare Materialien, und hat der Träger ein Trennelement, welches das erste Material und das zweite Material vor einer Expansion des ersten Materials und des zweiten Materials voneinander trennt.

Das Vorsehen eines solchen Trennelementes am Träger hat den Vorteil, dass dadurch beim Anbringen des ersten Materials und des zweiten Materials am Träger vor deren Expansion ein Bereich für die Anordnung des ersten Materials und des zweiten Materials auf dem Träger besser kontrollierbar ist.

In einer beispielhaften Ausführungsform sind das erste Material und das zweite Material vor einer Expansion zumindest 2 bis 20 mm voneinander beabstandet.

In einer beispielhaften Ausführungsform ist das Strukturelement ein Bestandteil einer C-Säule, einer D-Säule oder eines Radlaufs einer Karosserie des Kraftfahrzeugs.

Das Verstärken und Abdichten mit dem hier vorgeschlagenen System an den genannten Stellen der Karosserie des Kraftfahrzeugs hat den Vorteil, dass an diesen Stellen sowohl eine Abdichtfunktion als auch eine Verstärkungsfunktion der Karosserie wünschenswert ist. Es hat sich gezeigt, dass an diesen Stellen der Nutzen des hier vorgeschlagenen Systems besonders hoch ist.

In einer beispielhaften Ausführungsform bildet der Träger am ersten Randbereich und/oder am zweiten Randbereich einen Fortsatz, welcher im Wesentlichen parallel zur ersten Seite und zur zweiten Seite des Trägers verläuft.

Das Vorsehen eines solchen Fortsatzes hat den Vorteil, dass dadurch das Anbringen des ersten Materials und des zweiten Materials am Träger vereinfacht werden kann, und dass zudem bei einer allfälligen Expansion des ersten Materials oder des zweiten Materials eine Expansionsrichtung durch diesen Fortsatz gelenkt werden kann.

Einzelheiten und Vorteile der Erfindung werden im Folgenden anhand von Ausführungsbeispielen und mit Bezug auf schematische Zeichnungen beschrieben.

Es zeigen:
- Fig. 1: schematische beispielhafte Darstellung einer Karosserie eines Kraftfahrzeuges;
- Fig. 2: schematischer Abschnitt eines beispielhaften Strukturelementes eines Kraftfahrzeuges;
- Fig. 3: schematischer Querschnitt durch ein beispielhaftes System eines abgedichteten und verstärkten Strukturelementes; und
- Fig. 4a bis 6b: schematische beispielhafte Ausführungsformen eines Elementes zur Abdichtung und Verstärkung eines Strukturelementes.

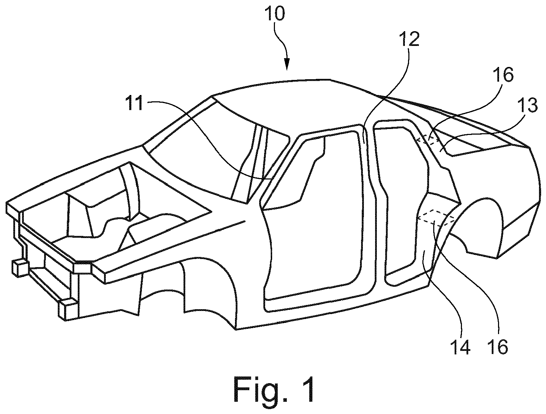

In Fig. 1 ist eine Karosserie 10 eines Automobils schematisch dargestellt. Die Karosserie 10 weist dabei verschiedene Strukturen mit Hohlräumen, wie beispielsweise die A-Säule 11, die B-Säule 12, die C-Säule 13 oder den Radlauf 14 auf. Solche Strukturen mit Hohlräumen können nun durch Elemente 16 abgedichtet und verstärkt werden.

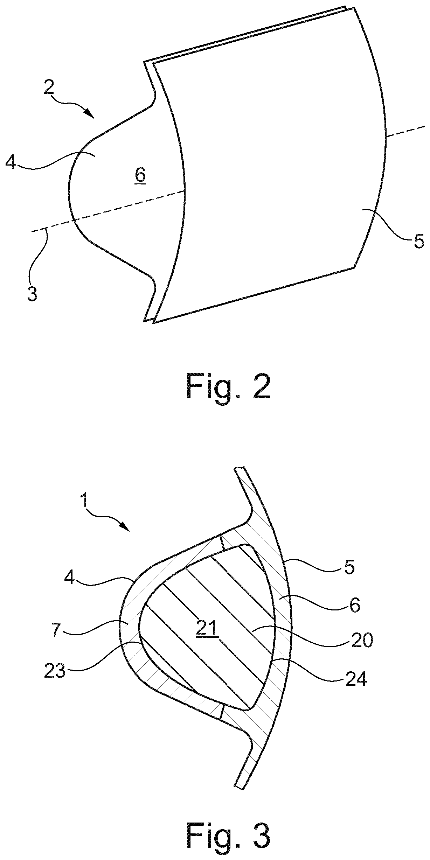

In Fig. 2 ist schematisch ein Abschnitt eines beispielhaften Strukturelementes 2 dargestellt. Dabei hat das Strukturelement 2 einen Hohlraum 6, welcher zwischen einem ersten Bereich 4 und einem zweiten Bereich 5 liegt. Der erste Bereich 4 kann beispielsweise ein erstes Blech sein und der zweite Bereich 5 kann beispielsweise ein zweites Blech sein. Dabei können die Bleche an Fügeorten miteinander verbunden sein, wie dies in Fig. 2 dargestellt ist. Weiterhin hat der Hohlraum 6 bzw. das Strukturelement 2 eine Längsachse 3.

In Fig. 3 ist nun ein System 1 eines abgedichteten und verstärkten Strukturelementes 2 dargestellt. Dabei ist ein Träger 20 im Hohlraum des Strukturelementes 2 angeordnet, wobei der Träger 20 eine erste Seite 21, eine zweite Seite (nicht sichtbar auf dieser Darstellung), einen ersten Randbereich 23 und einen zweiten Randbereich 24 umfasst. Zwischen dem ersten Randbereich 23 und dem Strukturelement 2 ist das erste Material 7 angeordnet, und zwischen dem zweiten Randbereich 24 und dem Strukturelement 2 ist das zweite Material 8 angeordnet.

In diesem Ausführungsbeispiel ist das erste Material 7 nur in Kontakt mit dem ersten Bereich 4 des Strukturelementes 2, wohingegen das zweite Material 8 sowohl in Kontakt mit dem ersten Bereich 4 als auch mit dem zweiten Bereich 5 des Strukturelementes ist. Beispielsweise kann der erste Bereich 4 ein nicht sichtbarer Bereich der Karosserie sein, und der zweite Bereich 5 kann ein sichtbarer Bereich der Karosserie sein.

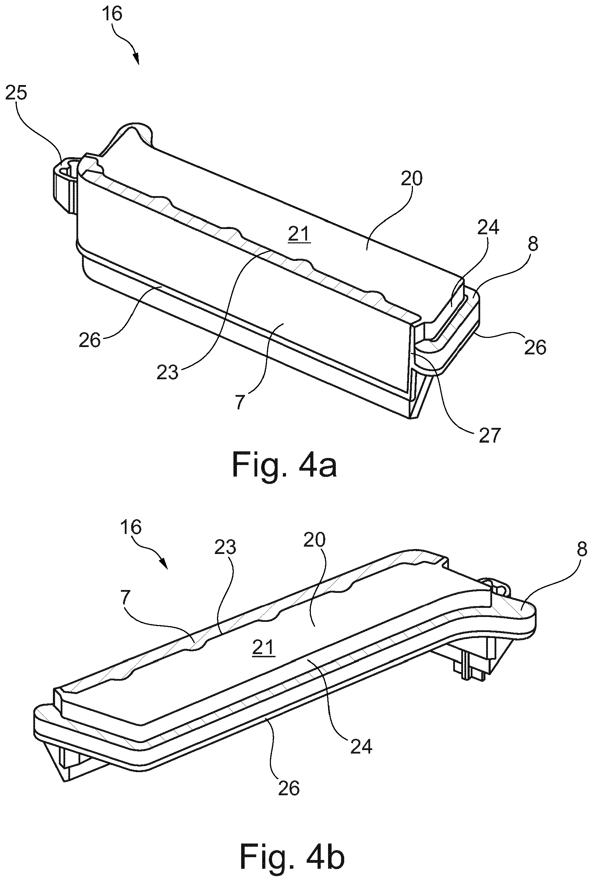

In den Fig. 4a bis 6b sind verschiedene Ausführungsbeispiele von Elementen 16 zur Abdichtung und Verstärkung von Strukturelementen dargestellt. Dabei umfassen die Elemente 16 jeweils einen Träger 20 sowie ein darauf angeordnetes erstes Material 7 und zweites Material 8. Das erste Material 7 und das zweite Material 8 sind dabei jeweils in einem nicht expandierten und nicht ausgehärteten Zustand abgebildet. Der Träger 20 hat jeweils eine erste Seite 21 und eine der ersten Seite 21 gegenüberliegende zweite Seite 22. Zudem hat der Träger 20 jeweils einen ersten Randbereich 23, an welchem das erste Material 7 angeordnet ist, und einen zweiten Randbereich 24, an welchem das zweite Material 8 angeordnet ist.

Weiterhin hat der Träger 20 ein Befestigungselement 25, welches insbesondere als Clip ausgestaltet sein kann. Durch dieses Befestigungselement 25 kann das Element 16 im Strukturelement befestigt werden, bevor das erste Material 7 und das zweite Material 8 expandieren und/oder aushärten.

Zudem ist in den gezeigten Ausführungsbeispielen ersichtlich, dass der Träger 20 an den Randbereichen 23, 24 einen Fortsatz 26 haben kann, auf welchem das erste Material 7 und/oder das zweite Material 8 abgestützt ist. Dieser Fortsatz 26 dient insbesondere auch dazu, das erste Material 7 und/oder das zweite Material 8 bei deren Expansion zu führen.

Das in den Fig. 4a und 4b dargestellte Ausführungsbeispiel umfasst einen Träger 20, welcher länglich ausgebildet ist und welcher im Wesentlichen in einer Ebene liegt.

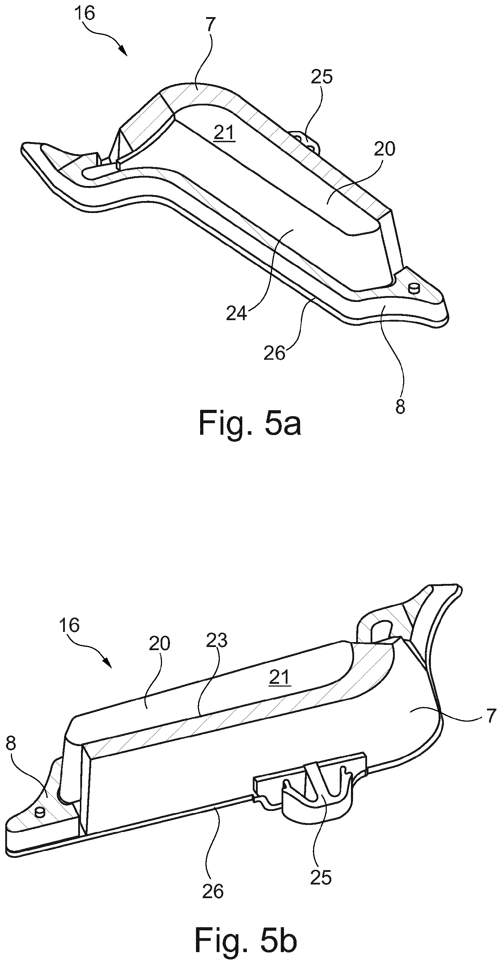

Das in den Fig. 5a und 5b dargestellte Ausführungsbeispiel umfasst ebenfalls einen länglichen Träger. In diesem Ausführungsbeispiel ist der Träger an seinen Enden abgeflacht ausgebildet.

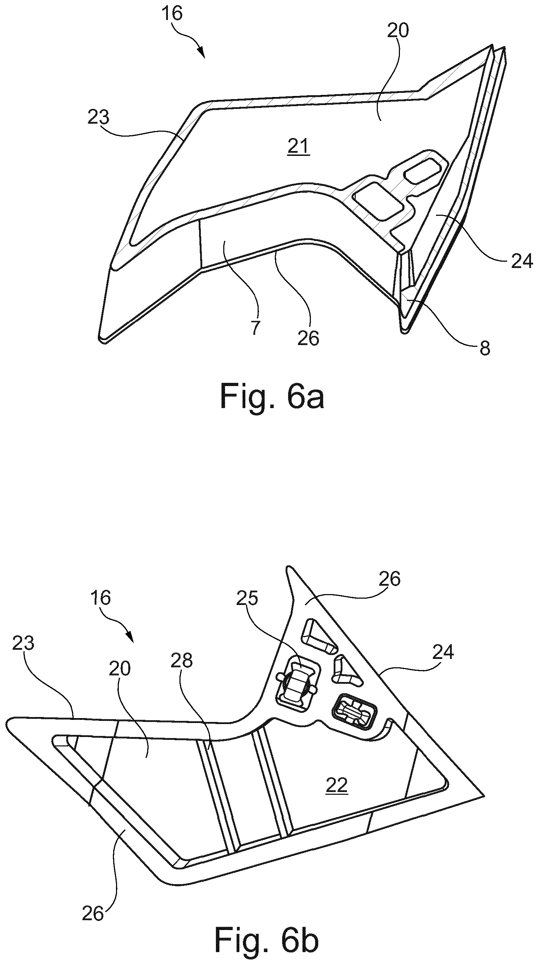

Das in den Fig. 6a und 6b dargestellte Ausführungsbeispiel umfasst einen Träger 20, welcher nicht in einer Ebene angeordnet ist. Der Träger 20 in diesem

Ausführungsbeispiel hat insbesondere eine Ecke, welche aus der allgemeinen Ebene des Trägers angewinkelt ausgestaltet ist. Zudem ist der Träger in den Fig. 6a und 6b mit Rippen 28 ausgestattet. In Fig. 6b ist zudem ersichtlich, dass sich der Fortsatz 26 um den gesamten Umfang des Trägers 20 erstrecken kann. Zudem ist in Fig. 6a ersichtlich, dass der Träger 20 Durchgänge haben kann, welche jedoch durch das erste Material 7 und/oder das zweite Material 8 in deren expandiertem Zustand verschlossen sind.

### Bezugszeichenliste

- 1: System
- 2: Strukturelement
- 3: Längsachse des Strukturelementes
- 4: erster Bereich (nicht sichtbar)
- 5: zweiter Bereich (sichtbar)
- 6: Hohlraum
- 7: erstes Material
- 8: zweites Material
- 10: Karosserie
- 11: A-Säule
- 12: B-Säule
- 13: C-Säule
- 14: Radlauf
- 16: Element
- 20: Träger
- 21: erste Seite
- 22: zweite Seite
- 23: erster Randbereich
- 24: zweiter Randbereich
- 25: Befestigungselement
- 26: Fortsatz
- 27: Trennelement
- 28: Rippen

## Patentansprüche

1. System (1) eines abgedichteten und verstärkten Strukturelementes (2) eines Kraftfahrzeugs, das System (1) umfassend:
ein Strukturelement (2), welches einen Hohlraum (6) mit einer Längsachse (3) hat;
einen Träger (20) mit einer ersten Seite (21) und einer zweiten Seite (22) und mit einem ersten Randbereich (23) und einem zweiten Randbereich (24), wobei die Randbereiche (23, 24) jeweils dem Strukturelement (2) zugewandt sind, und wobei die erste Seite (21) und die zweite Seite (22) jeweils orthogonal zur Längsachse (3) des Strukturelementes (2) angeordnet sind;
ein erstes Material (7) zur Verstärkung des Strukturelementes (2), welches zumindest zwischen dem ersten Randbereich (23) des Trägers (20) und dem Strukturelement (2) angeordnet ist, wobei das erste Material (7) ein E-Modul von zumindest 100 MPa hat; und
ein zweites Material (8) zur Abdichtung des Strukturelementes (2), welches zumindest zwischen dem zweiten Randbereich (24) des Trägers (20) und dem Strukturelement (2) angeordnet ist, wobei das zweite Material (8) ein E-Modul von höchstens 20 MPa hat.

2. System (1) nach Anspruch 1, wobei der Träger (20) eine Dicke, gemessen in Richtung der Längsachse (3) des Hohlraums (6), von 5 bis 50 mm hat.

3. System (1) nach einem der Ansprüche 1 oder 2, wobei die erste Seite (21) und die zweite Seite (22) des Trägers (20) jeweils eine geschlossene Fläche bilden, oder wobei die erste Seite (21) und die zweite Seite (22) Durchgänge haben, welche durch das erste Material (7) und/oder das zweite Material (8) abgedichtet sind.

4. System (1) nach einem der vorhergehenden Ansprüche, wobei ein Querschnitt des Strukturelementes (2) durch den Träger (20), das erste Material (7) und das zweite Material (8) vollständig abgedichtet ist.

5. System (1) nach einem der vorhergehenden Ansprüche, wobei der Träger (20) Rippen (28) zur mechanischen Verstärkung des Trägers (20) hat.

6. System (1) nach einem der vorhergehenden Ansprüche, wobei der Träger (20) zumindest teilweise aus Kunststoff oder aus glasfaserverstärktem Kunststoff oder aus karbonfaserverstärktem Kunststoff besteht.

7. System (1) nach einem der vorhergehenden Ansprüche, wobei das erste Material (7) einen Klebstoff umfasst, welcher durch eine Temperatur von mehr als 120°C härtbar ist und/oder
wobei das erste Material (7) eine Expansionsrate von weniger als 500% hat oder ein nicht expandierbares Material ist.

8. System (1) nach einem der vorhergehenden Ansprüche, wobei das zweite Material (8) einen Klebstoff umfasst, welcher durch eine Temperatur von mehr als 120°C härtbar ist und wobei das zweite Material (8) ein nicht expandierbares Material ist; oder
wobei das zweite Material (8) eine Expansionsrate von mehr als 500% hat.

9. System (1) nach einem der vorhergehenden Ansprüche, wobei das erste Material (7) in einem ersten Bereich (4) des Strukturelementes (2) angeordnet ist, welcher eine nicht sichtbare Fläche des Kraftfahrzeugs bildet, und/oder
wobei das zweite Material (8) zumindest in einem zweiten Bereich (5) des Strukturelementes (2) angeordnet ist, welcher eine sichtbare Fläche des Kraftfahrzeugs bildet.

10. System (1) nach einem der vorhergehenden Ansprüche, wobei das erste Material (7) und das zweite Material (8) jeweils expandierbare Materialien sind, und wobei der Träger (20) ein Trennelement (27) hat, welches das erste Material (7) und das zweite Material (8) vor einer Expansion des ersten Materials (7) und des zweiten Materials (8) voneinander trennt.

11. System (1) nach Anspruch 10, wobei das erste Material (7) und das zweite Material (8) vor einer Expansion zumindest 2 bis 20 mm voneinander beabstandet sind.

12. System (1) nach einem der vorhergehenden Ansprüche, wobei der Träger (20) am ersten Randbereich (23) und/oder am zweiten Randbereich (24) einen Fortsatz (26) bildet, welcher im Wesentlichen parallel zur ersten Seite (21) und zur zweiten Seite (22) des Trägers (20) verläuft.

13. System (1) nach einem der vorhergehenden Ansprüche, wobei das Strukturelement (2) ein Bestandteil einer C-Säule (13), einer D-Säule oder eines Radlaufs (14) einer Karosserie (10) des Kraftfahrzeugs ist.

14. Element (16) zur Abdichtung und Verstärkung eines Strukturelementes (2), wobei das Element (16) zur Verwendung in einem System (1) gemäss einem der Ansprüche 1 bis 13 geeignet ist, und wobei das Element (16) einen Träger (20), ein erstes Material (7) und ein zweites Material (8) gemäss einem der Ansprüche 1 bis 13 umfasst.

## Claims

1. System (1) of a sealed and reinforced structural element (2) of a motor vehicle, the system (1) comprising:
a structural element (2), which has a cavity (6) with a longitudinal axis (3);
a carrier (20) with a first side (21) and a second side (22) and with a first edge region (23) and a second edge region (24), wherein the edge regions (23, 24) are each facing the structural element (2), and wherein the first side (21) and the second side (22) are each arranged orthogonal to the longitudinal axis (3) of the structural element (2);
a first material (7) for reinforcing the structural element (2), which is arranged at least between the first edge region (23) of the carrier (20) and the structural element (2), wherein the first material (7) has a modulus of elasticity of at least 100 MPa; and
a second material (8) for sealing the structural element (2), which is arranged at least between the second edge region (24) of the carrier (20) and the structural element (2), wherein the second material (8) has a modulus of elasticity of at most 20 MPa.

2. System (1) according to Claim 1, wherein the carrier (20) has a thickness, measured in the direction of the longitudinal axis (3) of the cavity (6), of 5 to 50 mm.

3. System (1) according to either of Claims 1 and 2, wherein the first side (21) and the second side (22) of the carrier (20) each form a closed surface, or wherein the first side (21) and the second side (22) have passages which are sealed by the first material (7) and/or the second material (8).

4. System (1) according to one of the preceding claims, wherein a cross section of the structural element (2) is completely sealed by the carrier (20), the first material (7) and the second material (8).

5. System (1) according to one of the preceding claims, wherein the carrier (20) has ribs (28) for mechanically reinforcing the carrier (20).

6. System (1) according to one of the preceding claims, wherein the carrier (20) consists at least partially of plastic or of glass-fiber reinforced plastic or of carbon-fiber reinforced plastic.

7. System (1) according to one of the preceding claims, wherein the first material (7) comprises an adhesive that is curable by a temperature of more than 120°C and/or
wherein the first material (7) has an expansion rate of less than 500% or is a non-expandable material.

8. System (1) according to one of the preceding claims, wherein the second material (8) comprises an adhesive that is curable by a temperature of more than 120°C and wherein the second material (8) is a non-expandable material; or
wherein the second material (8) has an expansion rate of more than 500%.

9. System (1) according to one of the preceding claims, wherein the first material (7) is arranged in a first region (4) of the structural element (2), which forms a non-visible surface of the motor vehicle, and/or
wherein the second material (8) is arranged at least in a second region (5) of the structural element (2), which forms a visible surface of the motor vehicle.

10. System (1) according to one of the preceding claims, wherein the first material (7) and the second material (8) are each expandable materials, and wherein the carrier (20) has a separating element (27), which separates the first material (7) and the second material (8) from one another prior to expansion of the first material (7) and the second material (8).

11. System (1) according to Claim 10, wherein the first material (7) and the second material (8) are at least 2 to 20 mm apart prior to expansion.

12. System (1) according to one of the preceding claims, wherein, at the first edge region (23) and/or at the second edge region (24), the carrier (20) forms an extension (26), which runs substantially parallel to the first side (21) and to the second side (22) of the carrier (20) .

13. System (1) according to one of the preceding claims, wherein the structural element (2) is a component part of a C-pillar (13), a D-pillar or a wheel arch (14) of a body (10) of the motor vehicle.

14. Element (16) for sealing and reinforcing a structural element (2), wherein the element (16) is suitable for use in a system (1) according to one of Claims 1 to 13, and wherein the element (16) comprises a carrier (20), a first material (7) and a second material (8) according to one of Claims 1 to 13.

## Revendications

1. Système (1) d'un élément structurel rendu étanche et renforcé (2) d'un véhicule automobile, le système (1) comprenant :
un élément structurel (2) qui présente une cavité (6) ayant un axe longitudinal (3) ;
un support (20) doté d'une première face (21) et d'une deuxième face (22) et d'une première zone de bord (23) et d'une deuxième zone de bord (24), les zones de bord (23, 24) étant respectivement tournées vers l'élément structurel (2), et la première face (21) et la deuxième face (22) étant disposées respectivement de manière orthogonale à l'axe longitudinal (3) de l'élément structurel (2) ;
un premier matériau (7) pour renforcer l'élément structurel (2) et qui est disposé au moins entre la première zone de bord (23) du support (20) et l'élément structurel (2), le premier matériau (7) ayant un module d'élasticité d'au moins 100 MPa ; et
un deuxième matériau (8) pour rendre étanche l'élément structurel (2) et qui est disposé au moins entre la deuxième zone de bord (24) du support (20) et l'élément structurel (2), le deuxième matériau (8) ayant un module d'élasticité au maximum de 20 MPa.

2. Système (1) selon la revendication 1, dans lequel le support (20) présente une épaisseur comprise entre 5 et 50 mm, mesurée en direction de l'axe longitudinal (3) de la cavité (6).

3. Système (1) selon l'une quelconque des revendications 1 et 2, dans lequel la première face (21) et la deuxième face (22) du support (20) forment respectivement une surface fermée, ou dans lequel la première face (21) et la deuxième face (22) présentent des passages qui sont rendus étanches par le premier matériau (7) et/ou le deuxième matériau (8).

4. Système (1) selon l'une quelconque des revendications précédentes, dans lequel une section transversale de l'élément structurel (2) est rendue entièrement étanche par le support (20), le premier matériau (7) et le deuxième matériau (8).

5. Système (1) selon l'une quelconque des revendications précédentes, dans lequel le support (20) présente des nervures (28) destinées à un renforcement mécanique du support (20).

6. Système (1) selon l'une quelconque des revendications précédentes, dans lequel le support (20) est constitué au moins en partie de matière plastique ou de matière plastique renforcée fibres de verre ou de matière plastique renforcée fibres de carbone.

7. Système (1) selon l'une quelconque des revendications précédentes,
dans lequel le premier matériau (7) comprend un adhésif qui est durcissable à une température supérieure à 120 °C, et/ou
dans lequel le premier matériau (7) présente un taux d'expansion inférieur à 500 % ou est un matériau non expansible.

8. Système (1) selon l'une quelconque des revendications précédentes,
dans lequel le deuxième matériau (8) comprend un adhésif qui est durcissable à une température supérieure à 120 °C et le deuxième matériau (8) est un matériau non expansible ; ou
dans lequel le deuxième matériau (8) présente un taux d'expansion supérieur à 500 %.

9. Système (1) selon l'une quelconque des revendications précédentes,
dans lequel le premier matériau (7) est disposé dans une première zone (4) de l'élément structurel (2) qui forme une surface invisible du véhicule automobile, et/ou
dans lequel le deuxième matériau (8) est disposé au moins dans une deuxième zone (5) de l'élément structurel (2) qui forme une surface visible du véhicule automobile.

10. Système (1) selon l'une quelconque des revendications précédentes, dans lequel le premier matériau (7) et le deuxième matériau (8) sont respectivement des matériaux expansibles, et dans lequel le support (20) présente un élément de séparation (27) qui sépare le premier matériau (7) et le deuxième matériau (8) avant une expansion du premier matériau (7) et du deuxième matériau (8).

11. Système (1) selon la revendication 10, dans lequel le premier matériau (7) et le deuxième matériau (8) sont espacés l'un de l'autre d'au moins 2 à 20 mm avant une expansion.

12. Système (1) selon l'une quelconque des revendications précédentes, dans lequel le support (20) forme dans la première zone de bord (23) et/ou dans la deuxième zone de bord (24) un prolongement (26) qui s'étend de manière substantiellement parallèle à la première face (21) et à la deuxième face (22) du support (20).

13. Système (1) selon l'une quelconque des revendications précédentes, dans lequel l'élément structurel (2) est un composant d'un montant C (13), d'un montant D ou d'un passage de roue (14) d'une carrosserie (10) du véhicule automobile.

14. Elément (16) permettant de rendre étanche et de renforcer un élément structurel (2), l'élément (16) étant adapté pour être utilisé dans un système (1) selon l'une quelconque des revendications 1 à 13, et l'élément (16) comprenant un support (20), un premier matériau (7) et un deuxième matériau (8) selon l'une quelconque des revendications 1 à 13.
